# EUROPÄISCHE PATENTSCHRIFT

(11) **EP 1 469 625 B1**
(45) Veröffentlichungstag und Bekanntmachung des Hinweises auf die Patenterteilung: **07.03.2012**
(21) Anmeldenummer: 04008683.7
(22) Anmeldetag: 10.04.2004
(51) Int. Cl.: H04L 1/00, H03M 13/05

(54) **Verfahren und Vorrichtung zum Paket-orientierten Übertragen sicherheitsrelevanter Daten**
Method and apparattus for packet oriented transmission of safety-relevant data.
Procédé et dispositf pour la transmission par paquets des données relatives à la sécurité.

(30) Priorität: 17.04.2003 DE 10318068
(43) Veröffentlichungstag der Anmeldung: 20.10.2004
(73) Patentinhaber: Phoenix Contact GmbH & Co KG, 32825 Blomberg (DE)
(72) Erfinder: Schmidt, Jochaim, 32805 Horn-Bad Meinberg (DE)
(74) Vertreter: Blumbach - Zinngrebe

(56) Entgegenhaltungen:
- US-A1- 2002 133 780
- YU P S ET AL: "A HYBRID ARQ SCHEME WITH PARITY RETRANSMISSION FOR ERROR CONTROL OF SATELLITE CHANNELS" IEEE TRANSACTIONS ON COMMUNICATIONS, IEEE INC. NEW YORK, US, Bd. COM-30, Nr. 7, PART 2, Juli 1982 (1982-07), Seiten 1701-1719, XP000758675 ISSN: 0090-6778
- WANG Y-M ET AL: "A MODIFIED SELECTIVE-REPEAT TYPE-II HYBRID ARQ SYSTEM" NATIONAL TELECOMMUNICATIONS CONFERENCE. (N.T.C.) NEW ORLEANS, NOVEMBER 29 - DECEMBER 3 1981, NEW YORK, I.E.E.E, US, Bd. VOL. 4 CONF. 1981, November 1981 (1981-11), Seiten G10401-G10405, XP000793946
- BLACKMORE F A ET AL: "Coding techniques to improve the reliability of EMCON transmissions" MILITARY COMMUNICATIONS CONFERENCE, 1996. MILCOM '96, CONFERENCE PROCEEDINGS, IEEE MCLEAN, VA, USA 21-24 OCT. 1996, NEW YORK, NY, USA,IEEE, US, 21. Oktober 1996 (1996-10-21), Seiten 447-452, XP010203893 ISBN: 0-7803-3682-8

## Beschreibung

Die Erfindung betrifft ein Verfahren und Vorrichtungen zum Paket-orientierten Übertragen sicherheitsrelevanter Daten.

Insbesondere bei der Übertragung sicherheitsrelevanter Daten über ein ungesichertes Medium, wie beispielsweise über ein herkömmliches Netzwerk und/oder Bussystem, wird solchen Daten in der Regel eine hochwertige Redundanz hinzugefügt, so dass nahezu alle statistischen und systematischen Fehler des gesamten Übertragungssystems keine negative Auswirkung auf die Integrität der Daten haben und hohen sicherheitstechnischen Anforderungen im Hinblick auf die Kommunikation zwischen einzelnen Netzund/oder Busteilnehmern entsprochen wird.

Üblicherweise geschieht dies durch die Erweiterung der sicherheitsrelevanten Daten um einen Datensicherungswert, welcher basierend auf den sicherheitsrelevanten Daten generiert und dem jeweiligen Protokoll entsprechend, den sicherheitsrelevanten Daten eines zu übertragenden Datenpakets angehängt wird.

Aus der Deutschen Offenlegungsschrift DE 100 65 907 A1 ist beispielsweise ein Verfahren offenbart, welches auf dem allgemein bekannten Prinzip einer "Redundanz mit Kreuzvergleich" beruht. Hierbei werden senderseitig, je nach Art der Applikation einkanalig oder zweikanalig zur Verfügung gestellte sicherheitsrelevante Daten zweifach, d.h. in zwei Datenpaketen, und unabhängig voneinander mit redundanter Information aufbereitet und über separate Verbindungen oder zeitlich nacheinander über eine Verbindung zur Empfangsseite übertragen. Je nach Applikation kann der Dateninhalt eines der beiden aufbereiteten sicherheitsgerichteten Datenpakete auch invertierte Daten oder andere zusätzliche Verschachtelungen aufweisen, um beispielsweise auch systematische Fehler in den Sendern, Empfängern und/oder anderen die Daten weiterleitenden Einheiten zu erkennen. Darüber hinaus ist gemäß Offenbarung vorgesehen, senderseitig und/oder empfängerseitig die beiden aufbereiteten Datenpakete kreuzweise auf Richtigkeit zu überprüfen, indem die innerhalb der Datenpakete jeweils zugefügte Redundanz untersucht wird.

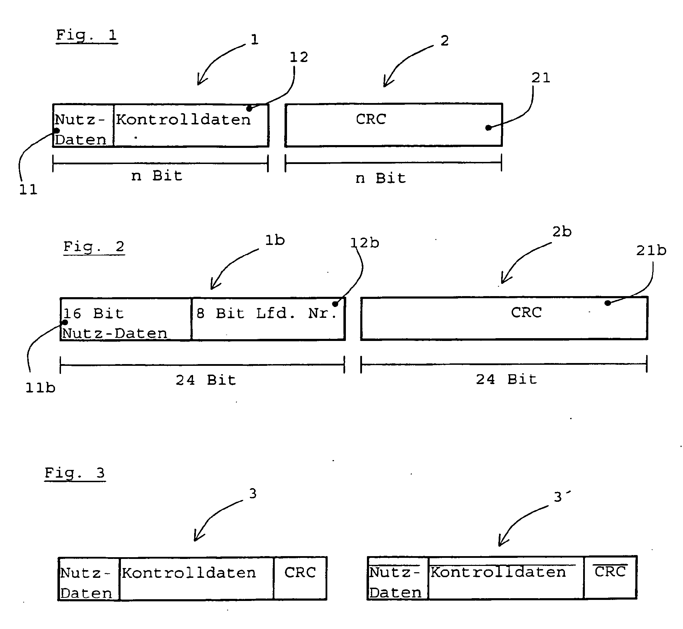

Die komplette sicherheitsgerichtete Nachricht nach dem Stand der Technik ist dann beispielsweise gemäß der beigefügten Figur 3 aufgebaut, wobei diese sicherheitsgerichtete Nachricht folglich zwei Datenpakete 3 und 3' umfasst. Gemäß Fig. 3 enthalten die sicherheitsrelevanten Daten neben den eigentlichen Nutzdaten ferner zusätzliche Kontrolldaten, wobei jedes der Datenpakte 3 und 3' diese Daten mit dem gleichen Informationsgehalt, jedoch unterschiedlich kodiert umfasst. Darüber hinaus enthält jedes Datenpaket 3 bzw. 3' einen basierend auf den sicherheitsrelevanten Daten generierten Block redundanter Information *CRC* bzw. *C̅R̅C̅.*

Ein wesentlicher Nachteil dieses an sich bekannten Verfahrens gemäß dem Stand der Technik liegt jedoch insbesondere in dem schlechten Verhältnis von Nutzdatenlänge zur Gesamtdatenlänge, welches sich bei abnehmender Anzahl von zu übertragenden Nutzdaten je Datenpaket, wie dieses beispielsweise beim Interbus gegeben ist, zunehmend verschlechtert.

Aus "A Hybrid ARQ Scheme with Parity Retransmission for Error Control of Satellite Channels", IEEE, Juni 1982, Seiten 1701-1719, ist ein sogenanntes hybrides ARQ-Schema bekannt, welches eine Kombination aus einem herkömmlichen ARQ-Schema und einem FEC-Schema darstellt und insbesondere zur Fehlerkontrolle bei High-Speed Datenkommunikationssystemen mit signifikanten Umlaufzeiten, wie bei einer Satellitenübertragung, geeignet ist. Dieses Verfahren eignet sich somit nicht für eine Übertragung von sicherheitsrelevanten Daten, da hierbei gegebenenfalls extrem zeitnah reagiert werden muss.

Das Dokument US 2002/0133780 offenbart ein Verfahren zur Datenübertragung wobei Daten und darauf basierende Redundanz in verschiederen Paketen übertragen werden.

Eine Aufgabe der Erfindung besteht somit darin, einen neuen und gegenüber vorstehend aufgezeigtem Stand der Technik verbesserten Weg zur Paket-orientierten Übertragung sicherheitsrelevanter Daten bereitzustellen, mit welchen auch bei Gewährleistung einer wesentlich verbesserten Nutzdatenrate eine hochwertige Absicherung gegen statistische und systematische Fehler bei einem ungesicherten Übertragungsmedium sichergestellt ist.

Die erfindungsgemäße Lösung der Aufgabe ist auf höchst überraschende Weise bereits durch ein Verfahren mit den Merkmalen des Anspruchs 1, durch eine Vorrichtung mit den Merkmalen des Anspruchs 10 und durch ein Übertragungssystem mit den Merkmalen des Anspruchs 19 gegeben.

Vorteilhafte und/oder bevorzugte Ausführungsformen bzw.. Weiterbildungen sind Gegenstand der jeweiligen abhängigen Ansprüche.

Erfindungsgemäß ist somit zum Paket-orientierten Übertragen sicherheitsrelevanter Daten, insbesondere unter Verwendung wenigstens eines Übertragungssystems, welches ein paralleles und/oder serielles Netzwerk und/oder Bussystem mit zumindest einem daran angeschlossenen Teilnehmer umfasst, vorgesehen, dass die sicherheitsrelevanten Daten und eine auf den sicherheitsrelevanten Daten basierende redundante Information in verschiedenen Paketen übertragen werden.

Folglich ist von wesentlichem Vorteil, dass eine hochwertige Absicherung gegen statistische und systematische Fehler, insbesondere im Fall einer Übertragung über ein ungesichertes Medium, bei einer wesentlich verbesserten Nutzdatenrate gewährleistbar ist.

Zweckmäßiger Weise sieht die Erfindung somit die Bereitstellung einer Vorrichtung zum Paket-orientierten Übertragen sicherheitsrelevanter Daten zwischen wenigstens zwei Netzwerk- und/oder Busteilnehmern vor, die senderseitig angeordnete Mittel zum Paket-orientierten Einbetten von sicherheitsrelevanten Daten und zugeordneter redundanter Information in verschiedene Pakete aufweist und/oder empfangsseitig angeordnete Mittel aufweist, die zum Überprüfen einer fehlerfreien Übertragung sicherheitsrelevanter Daten basierend auf in unterschiedlichen Paketen eingebetteten sicherheitsrelevanten Daten und zugeordneter redundanter Information ausgebildet sind.

Die Erfindung ermöglicht somit darüber hinaus, dass lediglich Mittel zum Generieren, Übertragen und Überprüfen einer einzigen redundanten Informationseinheit zu jeder sicherheitsrelevanten Dateneinheit erforderlich sind, welches zu einer wesentlichen Vereinfachung bei der Datenverarbeitung, insbesondere von sicherheitsbasierten Eingangs- und/oder Ausgangseinrichtungen bzw. -teilnehmern eines Übertragungsnetzwerkes und/oder -busses führt.

Um zu gewährleisten, dass im Wesentlichen alle statistischen und systematischen Fehler im Übertragungssystem erkannt werden, ist in vorteilhafter eine Kodiereinrichtung vorgesehen, mit welcher die redundante Information entsprechend kodierbar ist.

In besonders bevorzugter Weiterbildung schlägt die Erfindung vor, für die redundante Information einen Datensicherungswert einzusetzen, der eine über den sicherheitsrelevanten Daten berechnete Checksumme enthält.

Eine derartige Checksumme ist hierbei beispielsweise unter Verwendung eines Polynoms derart wählbar, dass in besonders bevorzugter Weise jede der möglichen Checksummen aus genau einer der möglichen Kombinationen der sicherheitsrelevanten Daten hervorgeht.

Die Erfindung gewährleistet somit eine äußerst gute Absicherung gegen Bündelfehler sowie gegen Vertauschungen einzelner Komponenten der zu übertragenden sicherheitsgerichteten Nachricht insgesamt.

Gemäß praktischer Weiterbildung sind den senderseitig angeordneten Mitteln zum Einbetten treiberartige Mittel zum Generieren von redundanter Information zugeordnet, die die gleiche Anzahl von Bits aufweist wie sie die zu übertragenden sicherheitsrelevanten Daten aufweisen. Die Erfindung kann somit im Wesentlichen Applikations-spezifisch bei im Wesentlichen allen derzeit bekannten Netzwerken und/oder Bussystemen, wie beispielsweise dem Interbus, Ethernet, Profibus oder CAN eingesetzt werden.

Bei der erfindungsgemäßen Übertragung von sicherheitsrelevanten Daten und zugeordneter Redundanz in getrennten Paketen ist somit eine hohe Hammingdistanz einstellbar.

Da durch die Erfindung folglich ferner selbst bei einer geringen Anzahl von Nutzdaten eine hohe Dynamik bereits aufgrund nur eines sich ändernden Bits sichergestellt werden kann, ist bei der Weiterleitung der Daten eine besonders gute Erkennung auch von systematischen Fehlern insbesondere von nicht sicheren Netzwerk- und/oder Busteilnehmern, einschließlich Switches, Router, Verstärker, Gateways, Systemkoppler und/oder einem Master, gewährleistbar.

Die Erfindung sieht ferner je nach anwendungsspezifisch eingesetzten seriellen und/oder parallelen Netzwerken und/oder Bussystemen vor, dass die sicherheitsrelevanten Daten neben den eigentlichen Nutzdaten, also insbesondere Ein-/Ausgangsdaten und/oder andere sichere Prozessdaten weitere Daten, insbesondere Kontroll- und/oder Steuerdaten umfassen.

Ferner ist vorgesehen, die Pakete mit den einander zugeordneten sicherheitsrelevanten Daten und redundanten Informationen parallel oder seriell zu übertragen und/oder mehrere Pakete innerhalb eines vordefinierten (Über-)Rahmens zu übertragen, so dass die Erfindung bei unterschiedlichsten Applikationen und/oder Anwendungsgebieten einsetzbar ist. Insbesondere im letztgenannten Fall ist ferner bevorzugt vorgeschlagen, innerhalb der vordefinierten Struktur eines (Über-)Rahmens sicherheitsrelevante Daten und die darauf basierend generierte zugeordnete redundante Informationen gemeinsam zu übertragen, um die Implementierung für das empfangsseitige Bereitstellen von Mitteln zum Auslesen und Überprüfen der sicherheitsrelevanten Daten und zugeordneten redundanten Information insbesondere in Hinblick auf die Zuordnungfunktionalität zu vereinfachen.

Wenn die Pakete mit einander zugeordneten sicherheitsrelevanten Daten und redundanter Information voneinander getrennt übertragen werden, ist daher ferner in bevorzugter Weiterbildung vorgesehen, dass die zu übertragenden Datenpakete einen Adressierungsblock und/oder eine Kennung zur logischen Zuordnung umfassen. Eine derartige Adressierung und/oder Kennung wird in praktischer Ausführung von Applikations-spezifisch entsprechend angepassten senderseitigen Mitteln basierend auf dem jeweils eingesetzten Übertragungsformat in den zu übertragenden Datenpaketen derart eingebettet und von entsprechend empfangsseitig ausgebildeten Auslesungsmitteln für eine logische Zuordnung von Datenpaketen mit einander zugeordneten Inhalten zur Überprüfung einer fehlerfreien Übertragung verifiziert.

Je nach Applikationsgebiet der Erfindung, welches beispielsweise in der Gebäudeleittechnik, der Prozessindustrie, der Fertigungsindustrie, beim Personentransport und/oder für den Betrieb einer Automatisierungsanlage liegt, sowie basierend auf der individuellen Struktur des jeweiligen Netzwerks und/oder Bussystems, welches insbesondere eine ring-, linien-, stern- und/oder baumförmig ausgebildeten Struktur aufweist, ermöglicht die Erfindung in vorteilhafter Weise die Integration der vorstehend aufgeführten senderseitigen und empfangseitigen erfindungsgemäßen Mittel im Wesentlichen in jeder Teilnehmereinrichtung, also insbesondere in Masterund/oder Slaveteilnehmer.

Die Erfindung wird nachfolgend anhand eines bevorzugten Ausführungsbeispiels unter Bezugnahme auf die beigefügten Zeichnungen beschrieben.

In den Zeichnungen zeigen:
- Fig. 1: einen erfindungsgemäßen Aufbau von Datenpaketen zum Paket-orientierten Übertragen sicherheitsrelevanter Daten,
- Fig. 2: ein weiterer erfindungsgemäßer Aufbau zur Veranschaulichung der wesentlich verbesserten Erkennung von systematischen Fehlern, und
- Fig. 3: der Aufbau einer sicherheitsgerichteten Nachricht nach dem Stand der Technik.

Bezug nehmend auf Fig. 1 ist zur Bereitstellung einer Paket-orientierten Übertragung sicherheitsrelevanter Daten unter Gewährleistung einer hohen Nutzdatenrate bei gleichzeitiger hochwertiger Absicherung gegen statistische und systematische Fehler beispielhaft eine erfindungsgemäß zu übertragende sicherheitsgerichtete Nachricht dargestellt, welche zwei Datenpakete 1 und 2 umfasst.

Erfindungsgemäß weist eine sicherheitsgerichtete Nachricht eines sicherheitsrelevanten Satzes von Daten, wie bei Fig. 1 dargestellt, grundsätzlich wenigstens zwei separate Datenpakete 1 und 2 auf, von denen ein Datenpaket 1 sicherheitsrelevante Daten und ein weiteres Datenpaket 2 zugeordnete redundante Information umfasst.

Basierend auf diesem erfindungsgemäßen Aufbau ist sichergestellt, dass bei der Übertragung sicherheitsrelevanter Daten auch über ein ungesichertes Medium, also im Wesentlichen über ein Bus- und/oder Netzwerksystem, welches sicherheitsgerichteten Normen nicht genügt und/oder nicht sichere Systemteilnehmer umfasst, im Wesentlichen alle statistischen Fehler und systematischen Fehler erkennbar sind.

Statistische Fehler bei einer Datenübertragung basieren hierbei insbesondere auf von außen einwirkenden Störungen und/oder elektrischen Einflüssen, wohingegen systematische Fehler, herkömmlicherweise ihre Ursachen in Softwareund/oder Hardware-basierten Fehlern von im Übertragungsweg angeordneten Sendern, Empfängern und/oder anderen, die Daten weiterleitenden Einrichtungen finden, wie beispielsweise Switches, Router, Verstärker, Gateways und/oder Systemkoppler.

Negative Auswirkungen derartiger Ursachen auf die Integrität sicherheitsrelevanter Daten sind folglich, wie nachfolgend näher beschrieben, im Wesentlichen vollständig ausschließbar.

Das bei Fig. 1 dargestellte Datenpaket 1 umfasst als sicherheitsrelevante Daten einen Protokoll- und/oder Applikations-spezifischen Nutzdatenblock 11 und im vorliegenden Beispiel einen Kontrolldatenblock 12.

Applikations-spezifisch werden derartige Nutzdaten 11 senderseitig, insbesondere von Sensoren, Aktoren und/oder Steuerungseinrichtungen ein- oder zweikanalig bereitgestellt und basierend auf der Gesamtstruktur des Übertragungssystems, welches ring-, linien-, sternund/oder baumförmige Netz- und/oder Busstrukturen aufweisen kann, an eine definierte Empfangsseite, beispielsweise an einen Aktor oder Stell- Antrieb eines Schutzgitters übertragen. Solche Nutzdaten 11 umfassen folglich häufig reine Eingangs-/Ausgangsdaten. Einsatzgebiete von Übertragungssystemen, bei denen derartige Nutzdaten 11 teilweise oder vollumfänglich sicherheitsrelevante Daten darstellen, finden sich folglich insbesondere im Bereich der Fertigungsindustrie, des Personentransports, der Feuerungstechnik, der Prozessindustrie oder im Bereich der Gebäudeleittechnik.

Kontrolldaten 12 und/oder zusätzliche sichere oder nicht sichere Daten, wie beispielsweise Steuerdaten, oder wie bei Fig. 2 dargestellt, eine laufende Nummer 12b werden häufig zusätzlich zu diesen reinen Eingangs-/Ausgangsdaten 11 zur Prozesssteuerung generiert. Diese zusätzlichen Daten gestatten es beispielsweise den Kommunikationsteilnehmern im Wesentlichen die einwandfreie Funktion eines Gegenteilnehmers zu überprüfen, insbesondere durch Kontrolle des Übertragungspfades über Schrittketten durch jeweiligen Austausch von Kontrolldatenblöcken 12.

Das die sicherheitsgerichtete Nachricht vervollständigende Datenpaket 2 umfasst eine dem Informationsinhalt des Datenpakets 1 zugeordnete redundante Information 21, also einen auf den Nutzdaten 11 und den Kontrolldaten 12 basierten Datensicherungswert 21.

Der in dem Datenpaket 2 enthaltene Datensicherungswert 21 ist zweckmäßigerweise eine über die Nutzdaten 11 und den Kontrollblock 12 berechnete Checksumme CRC, die senderseitig mit angepassten treiberartigen Mitteln, insbesondere einem Mikroprozessor oder einer ähnlichen programmierbaren Schaltungsanordnung, anhand eines Fehler-Prüf-Algorithmus, beispielsweise in Form eines an sich bekannten "Cycle Redundancy Check" generiert wird.

An der Empfangsseite oder einer definierten Weiterverarbeitungsstelle werden die Teilnachrichten 1 und 2 von Apllikations-spezifisch angeordneten, insbesondere Slave-Teilnehmern und/oder einem Master-Teilnehmer ausgelesen und durch Untersuchung der redundanten Information 21 in Bezug auf die sicherheitsrelevanten Daten 11 und 12 hinsichtlich einer fehlerfreien Übertragung überprüft, bevor die sicherheitsrelevanten Nutzdaten 11 an die entsprechenden Ausgangsteilnehmer, wie beispielsweise einem Aktor zu dessen Ansteuerung weitergereicht werden.

Da zu übertragende Datenpakete Protokoll-spezifisch grundsätzlich stets die gleiche Anzahl von Bits aufweisen, besitzen somit, wie bei Fig. 1 zu sehen, auch das Datenpaket 1, welches die sicherheitsrelevanten Daten, also im vorliegenden Beispiel die Nutzdaten 11 und zusätzlich die Kontrolldaten 12 umfasst, und das die Checksumme 21 umfassende Datenpaket 2 jeweils die gleiche Bitlänge n.

Folglich ist die Nutzdatenrate, also das Verhältnis von Nutzdatenlänge zu Gesamtdatenlänge, einer erfindungsgemäß aufgebauten sicherheitsgerichteten Nachricht im Vergleich zu einer sicherheitsgerichteten Nachricht, bei welcher, wie bei Fig. 3 dargestellt, jedes Datenpaket 3 und 3' sowohl, wenn auch unterschiedlich codiert, die sicherheitsrelevanten Daten, also insbesondere die Nutzdaten, als auch einen auf den sicherheitsrelevanten Daten basierten Datensicherungswert umfasst, wesentlich höher.

Basierend auf der Einbettung der sicherheitsrelevanten Daten 11, 12 und der redundanten Information 21 in zwei verschiedene Datenpakete 1 bzw. 2 muss folglich lediglich die Generierung eines Datensicherungswertes 21 durchgeführt werden und ermöglicht die Erfindung somit die Einsparung eines Datensicherungswertes gegenüber der Übertragung sicherheitsrelevanter Daten gemäß dem Stand der Technik (Fig.3).

Um zusätzlich zur verbesserten Nutzdatenrate, insbesondere auch bei Übertragung eines lediglich eine geringe Anzahl von Nutzdaten 11 umfassenden sicherheitsrelevanten Datensatzes, darüber hinaus eine hochwertige Fehlerabsicherung für ein Senden und/oder Weiterleiten von sicherheitsrelevanten Daten durch nicht sichere Slave-Teilnehmern und/oder einem nicht sicheren Master zu gewährleisten, ist jedoch der folglich in der Anzahl der Bits gesteigerte Datensicherungswert 21 besonders effektiv.

Bevorzugt wird hierzu der Datensicherungswert 21, also insbesondere das CRC-Polynom bzw. der zur Generierung einer Checksumme verwendete Fehler-Prüf-Algorithmus so gewählt, dass jeder der 2ⁿ möglichen Datensicherungswerte aus genau einer der 2ⁿ Kombinationen der sicherheitsrelevanten Daten hervorgeht. Beide Datenpakete 1 und 2 der sicherheitsgerichteten Nachricht enthalten somit im Wesentlichen die gleichen Informationen, sind jedoch unterschiedlich kodiert.

Für die praktische Anwendung wird somit bei geeigneter Generierung der redundanten Information 21 eine sehr hohe Hammingdistanz bereitgestellt sowie eine gute Absicherung gegen Bündelfehler, gegen Vertauschen einzelner Komponenten der Daten der sicherheitsgerichteten Nachricht und eine gute Erkennung von Fehlern, insbesondere auch von systematischen Fehlern durch die unterschiedlichen Teilnachrichten 1 und 2, wie nachfolgend unter Bezugnahme auf Fig. 2 im einzelnen beschrieben, gewährleistet.

Bezug nehmend auf Fig. 2, bei welcher eine sicherheitsgerichtete Nachricht aus zwei jeweils 24 Bit umfassenden Datenpaketen 1b und 2b aufgebaut ist, wird die besonders gute Erkennung von systematischen Fehlern basierend auf der Erfindung besonders deutlich. Das die sicherheitsrelevanten Daten umfassende Datenpaket 1b umfasst hierbei zwei Bereiche, einen 16-Bit zählenden Nutzdatenbereich 11b und einen 8-Bit zählenden Bereich 12b zur Übertragung einer laufenden Nummer.

Wenn sich beispielsweise die zu sichernden Prozess- oder Eingangs-/Ausgangsdaten, also die 16-Bit umfassenden Nutzdaten 11b nicht ändern, zählt beispielsweise während einer Anwendung nur die laufende Nummer im Datenbereich 12b' hoch. Ist das Prüfpolynom 21b geeignet gewählt, ändern sich folglich in der großen, 24-Bit umfassenden Checksumme 21b immer eine ganze Reihe von Bits auf unterschiedlichsten Positionen. Diese hohe Dynamik der Nachrichten erlaubt es somit, systematische Fehler in den die sicherheitsgerichteten Nachrichten weiterleitenden Einrichtungen auf besonders einfache Weise und bei Gewährleistung höchster Sicherheit aufzudecken.

Anwendungsspezifisch bzw. basierend auf dem jeweiligen Netzwerk und/oder Bus gewährleistet die Erfindung darüber hinaus, dass die beiden, eine sicherheitsgerichtete Nachricht bildenden Teilnachrichten 1 und 2 auch innerhalb einer vordefinierten (Über-)Rahmenstruktur zusammengefasst werden und gemeinsam übertragen werden.

Grundsätzlich sei jedoch darauf hingewiesen, dass die Übertragung der beiden einander zugeordneten Teilnachrichten 1 und 2 auch getrennt, beispielsweise über separate Verbindung oder zeitlich nacheinander über eine Verbindung erfolgen kann. Ferner gewährleistet die Erfindung, dass die einander zugeordneten Teilnachrichten 1 und 2 auch innerhalb verschiedener vordefinierter (Über-)Rahmenstrukturen eingebettet und übertragen werden können. Hierzu ist zweckmäßigerweise vorgesehen, die einzelnen Pakete mit einem Adressierungsblock und/oder einer Kennung zur logischen Zuordnung zu versehen, so dass das empfängerseitige Auslesen, Zuordnen und Überprüfen auf fehlerfreie Übertragung von empfangenen Daten im Wesentlichen auch unabhängig von der zeitlichen Übertragung und/oder der Art und Weise der Übertragung der einander zugeordneten Teilnachrichten 1 und 2 durchführbar ist.

Die Erfindung ermöglicht somit, sicherheitsrelevante Daten bei einer hohen Nutzdatenrate über im Wesentlichen beliebige unsichere Medien zu übertragen, ohne dass die geforderte Sicherheit verloren geht. Beispielhaft sei an dieser Stelle auf den Interbus als ein für die Anwendung der Erfindung bevorzugtes Übertragungsmedium hingewiesen, bei welchem sichere Daten mit einer geringen Anzahl von Nutzdaten von nicht sicheren Teilnehmern und/oder dem nicht sicheren Master gesendet und/oder weitergeleitet werden.

## Patentansprüche

1. Verfahren zum Paket-orientierten Übertragen sicherheitsrelevanter Daten (11, 11b, 12, 12b) in der Gebäudeleittechnik, der Prozessindustrie, der Fertigungsindustrie, beim Personentransport und/oder für den Betrieb einer Automatisierungsanlage, wobei zusätzlich zu den sicherheitsrelevanten Daten (11, 11b, 12, 12b) jeweils eines Paketes jeweils lediglich eine und auf allen Daten dieses Paketes basierende redundante Information (21, 21b) übertragen wird, wobei die sicherheitsrelevanten Daten (11, 11b, 12, 12b) und die jeweils auf diesen Daten basierende redundante Information (21, 21b) in jeweils verschiedenen Paketen (1, 1b, 2, 2b) übertragen werden, und wobei das die sicherheitsrelevanten Daten umfassende Datenpaket (1, 1b) als sicherheitsrelevante Daten Nutzdaten (11, 11b) und Kontrolldaten (12, 12b) umfasst, und von Kommunikationsteilnehmern die einwandfreie Funktion eines Gegenteilnehmers durch Kontrolle des Übertragungspfades über Schrittketten durch jeweiligen Austausch von Kontrolldatenblöcken überprüft wird.

2. Verfahren nach Anspruch 1, **dadurch gekennzeichnet, dass** die redundante Information (21, 21b) kodiert wird.

3. Verfahren nach Anspruch 1 oder 2, **dadurch gekennzeichnet, dass** die redundante Information (21, 21b) eine über die sicherheitsrelevanten Daten berechnete Checksumme (CRC) ist.

4. Verfahren nach einem der Ansprüche 1 bis 3, **dadurch gekennzeichnet, dass** mehrere Pakete (1, 1b, 2, 2b) innerhalb einer vordefinierten (Über-)Rahmenstruktur übertragen werden.

5. Verfahren nach einem der Ansprüche 1 bis 4, **dadurch gekennzeichnet, dass** Pakete innerhalb einer vordefinierten (Über-)Rahmenstruktur einander zugeordnete sicherheitsrelevante Daten (11, 11b, 12, 12b) und redundante Information (21, 21b) umfassen.

6. Verfahren nach einem der Ansprüche 1 bis 5, **dadurch gekennzeichnet, dass** die Pakete (1, 1b, 2, 2b) mit einander zugeordneten sicherheitsrelevanten Daten (11, 11b, 12, 12b) und redundanter Information (21, 21b) parallel oder seriell übertragen werden.

7. Verfahren nach einem der Ansprüche 1 bis 6, **dadurch gekennzeichnet, dass** die Pakete (1, 1b, 2, 2b) mit einander zugeordneten sicherheitsrelevanten Daten und redundanter Information aneinander gereiht oder voneinander getrennt übertragen werden.

8. Verfahren nach einem der Ansprüche 1 bis 7, **dadurch gekennzeichnet, dass** die Pakete (1, 1b, 2, 2b) einen Adressierungsblock und/oder eine Kennung zur logischen Zuordnung umfassen.

9. Verfahren nach einem der vorstehenden Ansprüche 1 bis 8, welches unter Verwendung wenigstens eines Übertragungssystems, welches ein paralleles und/oder serielles Netzwerk und/oder Bussystem mit zumindest einem daran angeschlossenen Teilnehmer enthält, durchgeführt wird.

10. Vorrichtung zum Paket-orientierten Übertragen sicherheitsrelevanter Daten (11, 11b, 12, 12b) in der Gebäudeleittechnik, der Prozessindustrie, der Fertigungsindustrie, beim Personentransport und/oder für den Betrieb einer Automatisierungsanlage, umfassend senderseitig angeordnete Mittel zum Paket-orientierten Einbetten von sicherheitsrelevanten Daten (11, 11b, 12, 12b) und von jeweils lediglich einer den sicherheitsrelevanten Daten (11, 11b, 12, 12b) eines Paketes zugeordneter und auf allen diesen Daten basierender redundanter Information (21, 21b), wobei die Mittel zum Einbetten der sicherheitsrelevante Daten dund der jeweils zugeordneten redundanten Information in verschiedene Pakete (1, 1b, 2, 2b) ausgebildet sind, und wobei das die sicherheitsrelevanten Daten umfassende Datenpaket (1, 1b) als sicherheitsrelevante Daten Nutzdaten (11, 11b) und Kontrolldaten (12, 12b) umfasst, welche es Kommunikationsteilnehmern gestatten, die einwandfreie Funktion eines Gegenteilnehmers durch Kontrolle des Übertragungspfades über Schrittketten durch jeweiligen Austausch von Kontrolldatenblöcken zu überprüfen.

11. Vorrichtung nach Anspruch 10, **gekennzeichnet durch** eine Kodiereinrichtung zum Kodieren der redundanten Information (21, 21b).

12. Vorrichtung nach Anspruch 10 oder 11, **dadurch gekennzeichnet, dass** den Mitteln zum Einbetten Mittel zum Generieren von redundanter Information (21, 21b) mit gleicher Anzahl von Bits (n) wie die zu übertragende sicherheitsrelevanten Daten (11, 11b, 12, 12b) zugeordnet sind.

13. Vorrichtung nach Anspruch 10, 11 oder 12, **dadurch gekennzeichnet, dass** die Mittel zum Generieren und/oder Einbetten derart ausgebildet ist, dass aus jeder möglichen Kombination von sicherheitsgerichteten Daten (11, 11b, 12, 12b) eines Pakets (1, 1b) genau eine der möglichen Kombinationen innerhalb des Pakets (2, 2b) mit zugeordneter redundanter Information (21, 21b) eindeutig hervorgeht.

14. Vorrichtung zum Paket-orientierten Übertragen sicherheitsrelevanter Daten (11, 11b, 12, 12b), insbesondere nach einem der Ansprüche 11 bis 13, **gekennzeichnet durch** empfangsseitig angeordnete Mittel zum Überprüfen einer fehlerfreien Datenübertragung basierend auf sicherheitsrelevanten Daten (11, 11b, 12, 12b) und zugeordneter redundanter Information (21, 21b), die in verschiedenen Paketen (1, 1b, 2, 2b) eingebettet sind.

15. Vorrichtung nach Anspruch 14, **dadurch gekennzeichnet, dass** den Mitteln zum Überprüfen Mittel zum Auslesen und Zuordnen von mit unterschiedlichen Paketen empfangenen sicherheitsrelevanten Daten (11, 11b, 12, 12b) und zugeordneter redundanter Information (21, 21b) zugeordnet sind.

16. Vorrichtung nach einem der Ansprüche 11 bis 15, **dadurch gekennzeichnet, dass** mehrere Pakete (1, 1b, 2, 2b) mit sicherheitsrelevanten Daten (11, 11b, 12, 12b) und/oder zugeordneter redundanter Information (21, 21b) innerhalb einer vordefinierten (Über-)Rahmenstruktur übertragbar sind.

17. Vorrichtung nach einem der Ansprüche 11 bis 16, **gekennzeichnet durch** Mittel zum Paket-orientierten Einbetten und Auslesen von Adressierungsblöcken und/oder Kennungen zur logischen Zuordnung von einzelnen Paketen (1, 1b, 2, 2b) und/oder deren Inhalten (11, 11b, 12, 12b, 21, 21b) untereinander.

18. Vorrichtung nach einem der Ansprüche 11 bis 17, **dadurch gekennzeichnet, dass** die Mittel Slave-Einrichtungen und/oder einer Master-Einrichtung zugeordnet sind.

19. Vorrichtung nach einem der vorstehenden Ansprüche 11 bis 18, angepasst für ein Übertragungssystem mit wenigstens einem parallelen und/oder seriellen Netzwerk und/oder Bussystem.

20. Übertragungssystem mit wenigstens einem parallelen und/oder seriellen Netzwerk und/oder Bussystem und mit wenigstens einer Vorrichtung nach einem der Ansprüche 11 bis 19.

21. Übertragungssystem nach Anspruch 20, welches wenigstens eine ring-, linien-, stern- und/oder baumförmig ausgebildete Netz- und/oder Bus-Struktur aufweist.

22. Übertragungssystem nach Anspruch 20 oder 21, umfassend wenigstens einen Interbus, ein Ethernet, einen Profibus und/oder ein CAN.

## Claims

1. Method for the packet-oriented transmission of security-relevant data (11, 11b, 12, 12b) in building control technology, the process industry, the manufacturing industry, passenger transportation and/or for the operation of an automation plant, wherein in addition to the security-relevant data (11, 11b, 12, 12b) in each case of a packet merely one item of redundant information (21, 21b) based upon all data of this packet is transmitted in each case, wherein the security-relevant data (11, 11b, 12, 12b) and the redundant information (21, 21b) based in each case upon these data are transmitted in respectively different packets (1, 1b, 2, 2b), and wherein the data packet (1, 1b) comprising the security-relevant data comprises, as security-relevant data, user data (11, 11b) and check data (12, 12b), and the communication subscribers verify the faultless function of a counter subscriber by monitoring the transmission path via sequencers through the respective exchange of check data blocks.

2. Method as claimed in claim 1, **characterised in that** the redundant information (21, 21b) is encoded.

3. Method as claimed in claim 1 or 2, **characterised in that** the redundant information (21, 21b) is a check sum (CRC) calculated over the security-relevant data.

4. Method as claimed in any one of claims 1 to 3, **characterised in that** several packets (1, 1b, 2, 2b) are transmitted within a predefined (superset) frame structure.

5. Method as claimed in any one of claims 1 to 4, **characterised in that** packets within a predefined (superset) frame structure comprise mutually allocated security-relevant data (11, 11b, 12, 12b) and redundant information (21, 21b).

6. Method as claimed in any one of claims 1 to 5, **characterised in that** the packets (1, 1b, 2, 2b) having mutually allocated security-relevant data (11, 11b, 12, 12b) and redundant information (21, 21b) are transmitted in a parallel or serial manner.

7. Method as claimed in any one of claims 1 to 6, **characterised in that** the packets (1, 1b, 2, 2b) having mutually allocated security-relevant data and redundant information are transmitted in strings or separately from each other.

8. Method as claimed in any one of claims 1 to 7, **characterised in that** the packets (1, 1b, 2, 2b) comprise an addressing block and/or an identifier for logical allocation.

9. Method as claimed in any one of the preceding claims 1 to 8, which is performed using at least one transmission system which contains a parallel and/or serial network and/or bus system having at least one subscriber connected thereto.

10. Device for the packet-oriented transmission of security-relevant data (11, 11b, 12, 12b) in building control technology, the process industry, the manufacturing industry, passenger transportation and/or for the operation of an automation plant, comprising means, which are located on the sender-side, for the packet-oriented embedding of security relevant data (11, 11b, 12, 12b) and in each case of merely one item of redundant information (21, 21b) which is allocated to the security-relevant data (11, 11b, 12, 12b) of a packet and is based upon all of these data, wherein the means are formed for embedding the security-relevant data and the respectively allocated redundant information into different packets (1, 1b, 2, 2b), and wherein the data packet (1, 1b) which comprises the security-relevant data comprises, as security-relevant data, user data (11, 11b) and check data (12, 12b) which enable communication subscribers to verify the faultless function of a counter subscriber by monitoring the transmission path via sequencers through the respective exchange of check data blocks.

11. Device as claimed in claim 10, **characterised by** an encoding device for encoding the redundant information (21, 21b).

12. Device as claimed in claim 10 or 11, **characterised in that** the means for embedding are allocated means for generating redundant information (21, 21b) with the same number of bits (n) as the security-relevant data (11, 11b, 12, 12b) which are to be transmitted.

13. Device as claimed in claim to, 11 or 12, **characterised in that** the means for generating and/or embedding are formed in such a manner that any possible combination of security-relevant data (11, 11b, 12, 12b) of a packet (1, 1b) unequivocally results in exactly one of the possible combinations within the packet (2, 2b) with the allocated redundant information (21, 21b).

14. Device for the packet-oriented transmission of security-relevant data (11, 11b, 12, 12b), in particular as claimed in any one of claims 11 to 13, **characterised by** means, which are located on the receiver-side, for verifying an error-free data transmission based upon security-relevant data (11, 11b, 12, 12b) and allocated redundant information (21, 21b) which are embedded in different packets (1, 1b, 2, 2b).

15. Device as claimed in claim 14, **characterised in that** the means for verifying are allocated means for reading-out and allocating security-relevant data (11, 11b, 12, 12b), which are received with different packets, and allocated redundant information (21, 21b).

16. Device as claimed in any one of claims 11 to 15, **characterised in that** several packets (1, 1b, 2, 2b) having security-relevant data (11, 11b, 12, 12b) and/or allocated redundant information (21, 21b) can be transmitted within a predefined (superset) frame structure.

17. Device as claimed in any one of claims 11 to 16, **characterised by** means for the packet-oriented embedding and reading-out of addressing blocks and/or identifiers for the logical allocation of individual packets (1, 1b, 2, 2b) and/or their contents (11, 11b, 12, 12b, 21, 21b) among one another.

18. Device as claimed in any one of claims 11 to 17, **characterised in that** the means are allocated slave devices and/or a master device.

19. Device as claimed in any one of the preceding claims 11 to 18, adapted for a transmission system having at least one parallel and/or serial network and/or bus system.

20. Transmission system having at least one parallel and/or serial network and/or bus system and having at least one device as claimed in any one of claims 11 to 19.

21. Transmission system as claimed in claim 20, which comprises at least one ringshaped, line-shaped, star-shaped and/or tree-shaped network and/or bus structure.

22. Transmission system as claimed in claim 20 or 21, comprising at least one Interbus, Ethernet, Profibus and/or CAN.

## Revendications

1. Procédé pour la transmission orientée paquet de données importantes au niveau de la sécurité (11, 11b, 12, 12b) dans la technique de commande-contrôle de bâtiment, de l'industrie des procédés, de l'industrie de fabrication, lors du transport de personnes et/ou pour l'exploitation d'une installation d'automatisation, à chaque fois seule une information (21, 21b), redondante et basée sur toutes les données de ce paquet, étant transmise en supplément des données importantes au niveau de la sécurité (11, 11b, 12, 12b), les données importantes au niveau de la sécurité (11, 11b, 12, 12b) et l'information (21, 21b), redondante et basée respectivement sur ces données, étant transmises dans des paquets (1, 1b, 2, 2b) respectivement différents, et le paquet de données (1, 1b) comprenant les données importantes au niveau de la sécurité comprenant comme données importantes au niveau de la sécurité des données utiles (11, 11b) et des données de contrôle (12, 12b), et le parfait fonctionnement d'un contre-abonné étant vérifié par des abonnés de communication par le contrôle du chemin de transmission au moyen de chaînes pas à pas par l'échange respectif de blocs de données de contrôle.

2. Procédé selon la revendication 1, **caractérisé en ce que** l'information (21, 21b) redondante est codée.

3. Procédé selon la revendication 1 ou 2, **caractérisé en ce que** l'information (21, 21b) redondante est une somme de contrôle (CRC) calculée par les données importantes au niveau de la sécurité.

4. Procédé selon l'une des revendications 1 à 3, **caractérisé en ce que** plusieurs paquets (1, 1b, 2, 2b) sont transmis à l'intérieur d'une (super)structure cadre prédéfinie.

5. Procédé selon l'une des revendications 1 à 4, **caractérisé en ce que** des paquets comprennent à l'intérieur d'une (super)structure cadre prédéfinie de données (11, 11b, 12, 12b) importantes au niveau de la sécurité, qui sont associées les unes aux autres, et une information importante (21, 21b).

6. Procédé selon l'une des revendications 1 à 5, **caractérisé en ce que** les paquets (1, 1b, 2, 2b) avec des données (11, 11b, 12, 12b) importantes au niveau de la sécurité, associées les unes aux autres, et une information redondante (21, 21b) sont transmis en parallèle ou en série.

7. Procédé selon l'une des revendications 1 à 6, **caractérisé en ce que** les paquets (1, 1b, 2, 2b) avec des données importantes au niveau de la sécurité, associées les unes aux autres, et une information redondante sont transmis en rangées les uns à côté des autres ou séparés les uns des autres.

8. Procédé selon l'une des revendications 1 à 7, **caractérisé en ce que** les paquets (1, 1b, 2, 2b) comprennent un bloc d'adressage et/ou un code pour l'attribution logique.

9. Procédé selon l'une des revendications 1 à 8 précédentes, qui est mis en oeuvre en utilisant au moins un système de transmission, lequel contient un réseau et/ou système de bus parallèle et/ou série comprenant au moins un abonné raccordé à celui-ci.

10. Dispositif pour la transmission orientée paquet de données importantes au niveau de la sécurité (11, 11b, 12, 12b) dans la technique de commande-contrôle de bâtiment, de l'industrie des procédés, de l'industrie de fabrication, dans le cas de transport de personnes et/ou pour l'exploitation d'une installation d'automatisation, comprenant des moyens disposés côté émetteur pour l'intégration orientée paquet de données (11, 11b, 12, 12b) importantes au niveau de la sécurité et de respectivement uniquement une information redondante (21, 21b), attribuée aux données importantes au niveau de la sécurité (11, 11b, 12, 12b) d'un paquet et basée sur toutes ces données, les moyens destinés à l'intégration des données importantes au niveau de la sécurité et de l'information redondante respectivement associée étant conçus dans différents paquets (1, 1b, 2, 2b), et le paquet de données (1, 1b) comprenant les données importantes au niveau de la sécurité comprenant comme données importantes au niveau de la sécurité des données utiles (11, 11b) et des données de contrôle (12, 12b), qui permettent aux abonnés de la communication de contrôler le parfait fonctionnement d'un contre-abonné par le contrôle du chemin de transmission au moyen de chaînes pas à pas par l'échange respectif de blocs de données de contrôle.

11. Dispositif selon la revendication 10, **caractérisé par** un système de codage pour le codage de l'information redondante (21, 21b).

12. Dispositif selon la revendication 10 ou 11, **caractérisé en ce que** des moyens destinés à générer de l'information redondante (21, 21b) présentant un nombre identique de bits (n) à celui des données importantes au niveau de la sécurité (11, 11b, 12, 12b) à transmettre sont attribués aux moyens pour l'intégration.

13. Dispositif selon la revendication 10, 11 ou 12, **caractérisé en ce que** les moyens pour la génération et/ou l'intégration sont conçus de telle sorte que toute combinaison possible de données importantes au niveau de la sécurité (11, 11b, 12, 12b) d'un paquet (1, 1b) fait apparaître clairement exactement l'une des combinaisons possibles à l'intérieur du paquet (2, 2b) avec une information (21, 21b) redondante attribuée.

14. Dispositif pour la transmission orientée paquet de données importantes au niveau de la sécurité (11, 11b, 12, 12b), en particulier selon l'une des revendications 11 à 13, **caractérisé par** des moyens disposés côté réception pour le contrôle d'une transmission de données sans erreur en se basant sur des données importantes au niveau de la sécurité (11, 11b, 12, 12b) et d'information redondante attribuée (21, 21b), qui sont intégrées dans différents paquets (1, 1b, 2, 2b).

15. Dispositif selon la revendication 14, **caractérisé en ce que** des moyens pour lire et attribuer des données (11, 11b, 12, 12b) importantes au niveau de la sécurité, reçues avec différents paquets, et d'information (21, 21b) redondante attribuée, sont attribués aux moyens de contrôle.

16. Dispositif selon l'une des revendications 11 à 15, **caractérisé en ce que** plusieurs paquets (1, 1b, 2, 2b) avec des données importantes au niveau de la sécurité (11, 11b, 12, 12b) et/ou une information (21, 21b) redondante attribuée peuvent être transmis à l'intérieur d'une (super)structure cadre prédéfinie.

17. Dispositif selon l'une des revendications 11 à 16, **caractérisé par** des moyens pour l'intégration orientée paquet et la lecture de blocs d'adressage et/ou de codes pour l'attribution logique de paquets individuels (1, 1b, 2, 2b) et/ou de leurs contenus (11, 11b, 12, 12b, 21, 21b) entre eux.

18. Dispositif selon l'une des revendications 11 à 17, **caractérisé en ce que** les moyens sont attribués à des dispositifs esclaves et/ou à un dispositif maître.

19. Dispositif selon l'une des revendications 11 à 18 précédentes, adapté pour un système de transmission comprenant au moins un réseau et/ou système de bus parallèle et/ou série.

20. Système de transmission comprenant au moins un réseau et/ou système de bus parallèle et/ou série et au moins un dispositif selon l'une des revendications 11 à 19.

21. Système de transmission selon la revendication 20, lequel présente au moins une structure de réseau et/ou de bus conçue en forme d'anneau, de ligne, d'étoile et/ou d'arbre.

22. Système de transmission selon la revendication 20 ou 21, comprenant au moins un interbus, un Ethernet, un bus professionnel et ou un CAN.
